**Europäisches Patentamt**

**European Patent Office**

**Office européen des brevets**

(19)

(11) Numéro de publication: **0 247 911 B1**

# FASCICULE DE BREVET EUROPEEN

(12)

(45) Date de publication de fascicule du brevet: **02.12.92**　(51) Int. Cl.⁵: **G01S 7/02**

(21) Numéro de dépôt: **87400929.3**

(22) Date de dépôt: **22.04.87**

---

(54) **Radar protégé contre les échos de pluie et procédé de protection d'un radar contre les échos de pluie.**

---

(30) Priorité: **30.04.86 FR 8606328**

(43) Date de publication de la demande:
**02.12.87 Bulletin 87/49**

(45) Mention de la délivrance du brevet:
**02.12.92 Bulletin 92/49**

(84) Etats contractants désignés:
**DE GB IT NL**

(56) Documents cités:
**EP-A- 0 162 258**
**DE-A- 1 804 896**
**US-A- 3 849 780**
**US-A- 3 893 117**
**US-A- 3 918 059**

(73) Titulaire: **THOMSON-CSF**
**51, Esplanade du Général de Gaulle**
**F-92800 Puteaux(FR)**

(72) Inventeur: **Montheil, Jean-Claude**
**THOMSON-CSF SCPI 19, avenue de Messine**
**F-75008 Paris(FR)**

(74) Mandataire: **Courtellemont, Alain et al**
**THOMSON-CSF SCPI**
**F-92045 PARIS LA DEFENSE CEDEX 67(FR)**

# Description

La présente invention se rapporte aux radars et plus particulièrement à la protection des radars contre les échos du type pluie, c'est-à-dire contre les échos parasites provenant d'une réflexion simple du genre des réflexions sur une surface plane ou sphérique.

Il est connu, pour réduire ces échos parasites, d'utiliser des radars dans lesquels l'émission et la réception se font en polarisation circulaire, avec le même sens de polarisation pour l'émission et la réception ; par rapport à un radar travaillant en polarisation rectiligne, une atténuation de 15 à 20 dB est apportée sur le niveau de ces échos parasites. Cette atténuation n'est pas toujours suffisante, une réjection plus importante des échos du type pluie étant indispensable ; ceci est particulièrement vrai pour les radars aéroportés assurant un guidage de l'avion à altitude minimale.

De plus il est connu que, avec une émission radar en polarisation circulaire droite (ou gauche) et avec, dans une première mesure, la même polarisation en réception, un écho utile issu de réflexions multiples (écho de sol ou d'aéronef) subit une faible atténuation et un écho parasite (écho de pluie) est atténué de 15 à 20dB par le polariseur ; par contre si, dans une seconde mesure, toutes choses étant égales par ailleurs, la polarisation à la réception est inversée, l'écho utile subit une faible atténuation, de l'ordre de un décibel par rapport à la première mesure et l'écho parasite ne subit plus l'atténuation de 15 à 20 décibels. Ceci a permis, dans la demande de brevet européen d'origine allemande 0 162 258, de distinguer les échos de pluie et donc de les éliminer grâce à une antenne émettrice-réceptrice en polarisation circulaire droite, par exemple, et à deux antennes réceptrices auxiliaires l'une en polarisation circulaire droite et l'autre en polarisation circulaire gauche ; la comparaison des niveaux reçus permet de distinguer les échos de pluie. Il s'agit d'un dispositif coûteux puisqu'il nécessite deux antennes auxiliaires ; au mieux le coût pourrait en être réduit en n'utilisant qu'une antenne auxiliaire.

Le but de la présente invention est de proposer un radar protégé efficacement contre les échos de pluie mais ne nécessitant pas, pour cela, l'utilisation d'antennes auxiliaires.

Ceci est obtenu, en particulier, à l'aide d'une émission et d'une réception sur une même antenne en polarisation circulaire, et de l'emploi d'un polariseur commutable pour la réception ou pour l'émission.

Selon l'invention, un radar travaillant en polarisation circulaire et permettant l'identification des échos de pluie, est caractérisé en ce qu'il comporte : une antenne unique ; un polariseur associé à des moyens de commutation pour inverser d'une récurrence à la suivante, le sens de la polarisation circulaire à l'émission ou à la réception, afin de déterminer des blocs faits de deux récurrences successives ayant des sens de polarisation, à l'émission et à la réception, respectivement identiques et opposés ; un démultiplexeur pour démultiplexer les signaux vidéo relatifs à l'une et à l'autre des récurrences d'une bloc ; des moyens de comparaison pour comparer les signaux vidéo somme des deux récurrences d'un bloc ; et un commutateur commandé par les moyens de comparaison pour éliminer, parmi les signaux vidéo relatifs à l'une des deux récurrences d'un bloc, ceux que les moyens de comparaison désignent comme étant relatifs à des échos de pluie.

La présente invention sera mieux comprise et d'autres caractéristiques apparaîtront à l'aide de la description ci-après et des figures s'y rapportant qui représentent :
- les figures 1 et 2, des diagrammes des temps relatifs à des radars selon l'invention,
- la figure 3, le schéma d'un radar qui correspond, selon la façon dont il est réglé, soit au diagramme de la figure 1 soit à celui de la figure 2.

Le radar qui va être décrit et dont l'émission s'effectue en polarisation circulaire de sens constant (droit ou gauche), fonctionne en polarisation circulaire pour ce qui est de la réception mais avec inversion du sens (droit ou gauche) à chaque récurrence ; ceci permet, en comparant les signaux de deux récurrences successives, d'identifier les échos de pluie : pour un quantum distance donné, l'écho sera considéré comme un écho utile s'il conserve le même niveau, à de l'ordre d'un décibel près, et comme un écho de pluie si la différence de niveau atteint et même dépasse 10 décibels. Ce mode de fonctionnement est obtenu à l'aide d'un polariseur commutable (utilisation de commutateurs à diodes).

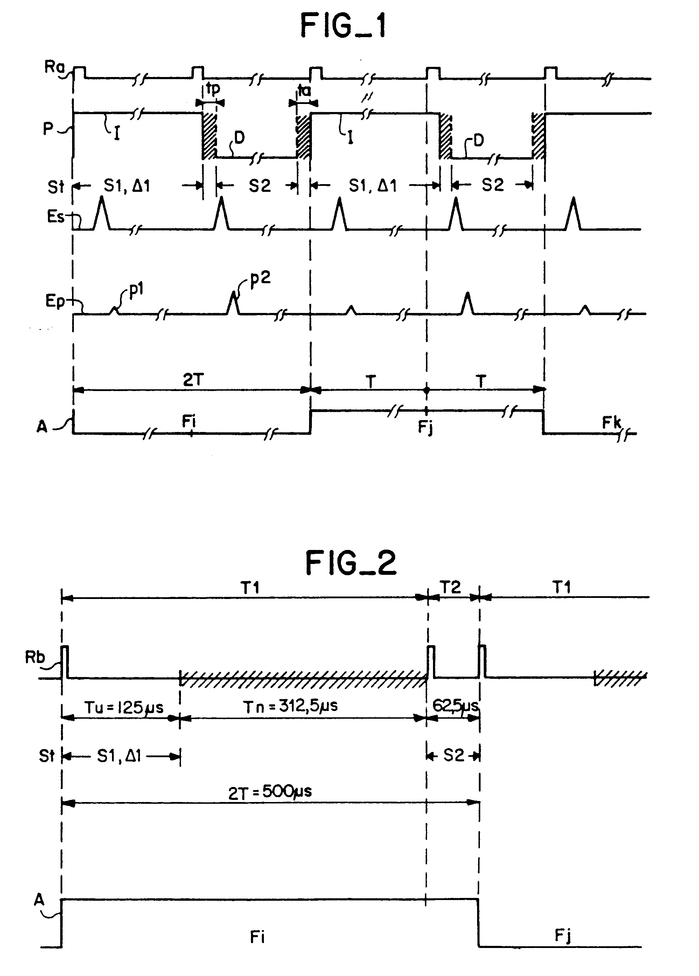

Dans l'exemple décrit l'émission du radar s'effectue en polarisation circulaire droite fixe avec modification de la fréquence émise toutes les deux récurrences. La figure 1 est un diagramme des temps relatif à un premier mode de fonctionnement du radar décrit. Sur cette figure une courbe A montre la commande d'agilité de la fréquence émise, avec des récurrences de durée T et une fréquence d'émission Fi, Fj, Fk... qui varie toutes les deux récurrences ; deux récurrences successives à la même fréquence d'émission constituent ce qui sera appelé un bloc de récurrence.

La réception radar se fait sur des polarisations circulaires dont le sens est inversé d'une récurrence à la suivante ; la commutation du polariseur s'effectue, comme le montre la courbe P de la figure 1 représentative des états du polariseur (polarisation, à la réception, identique I ou différente D de celle à l'émission), alternativement avant et après l'impulsion d'émission, de manière à conserver toujours le même sens de polarisation à l'émission. Ces impulsions d'émission ou, plus exactement, ces brefs signaux d'émission sont représentés sur la courbe Ra de la figure 1. Le temps de commutation, ta, avant l'impulsion émise entraîne une diminution de la valeur maximale des distances qu'il est possible de surveiller avec le radar, mais cet inconvénient est mineur si la période de récurrence T est suffisamment grande. Le temps de commutation, tp (avec tp = ta), après l'impulsion émise, entraîne la présence d'une zone aveugle correspondant aux distances très proches ; il y a donc intérêt à avoir, pour le polariseur, un temps de commutation aussi court que possible ; une valeur de temps de commutation de l'ordre d'une microseconde, comme dans l'exemple décrit, est relativement facile à obtenir et fait que la zone aveugle n'est pas gênante dans la plupart des cas d'utilisation d'un radar.

Dans le radar dont il vient d'être question, quel que soit le sens de polarisation à l'émission et à la réception, les échos utiles, c'est-à-dire issus de réflexions multiples, ont des niveaux équivalents à l'entrée du récepteur ; ces échos sont représentés par la courbe Es de la figure 1. Par contre les échos de pluie (échos parasites) issus de réflexions simples, ont des niveaux très différents selon que les sens de la polarisation à l'émission et à la réception sont les mêmes (état I de la courbe P) ou différents (état D) ; ces échos de pluie sont représentés par la courbe Ep de la figure 1. La courbe Ep montre effectivement que, par exemple, pour un bloc de deux récurrences pendant lesquelles la fréquence d'émission est Fi, de deux impulsions p1 et p2 relatives à un même écho de pluie, celle, p2, relative à la récurrence pendant laquelle les sens de polarisations émission et réception sont différents, est nettement supérieure à celle, p1, relative à des sens de polarisation identiques.

Ainsi, pour chaque quantum distance, la comparaison des niveaux reçus lors de deux récurrences consécutives permet de faire la différence entre les échos utiles (courbe Es) et les échos de pluie (courbe Ep). Il est à noter que, dans l'exemple décrit, la comparaison se fait sur des blocs de deux récurrences consécutives utilisant la même fréquence d'émission ; s'il n'est pas indispensable qu'il en soit ainsi, le fait d'utiliser la même fréquence pour l'obtention des échos à comparer permet :

- d'effectuer une comparaison dans les mêmes conditions d'émission,
- de diminuer dans un rapport 2 le nombre de fréquences agiles nécessaire.

Sur un bloc de deux récurrences, les signaux reçus lors de la première récurrence sont utilisés pour le filtrage et le traitement de l'ensemble des signaux de vidéo (voies somme $\vec{S}$ et écarts $\overrightarrow{\Delta C}$ et $\overrightarrow{\Delta E}$), tandis que les signaux reçus lors de la seconde récurrence servent seulement à obtenir les signaux de vidéo sommes à comparer avec ceux de la récurrence précédente pour identifier et éliminer les échos de pluie reçus lors de la première récurrence (impulsions p1 selon la courbe Ep de la figure 1). Sur la figure 1 les signaux traités, St, sont indiqués : signaux somme, S1, et écarts, $\Delta$1, pendant la première récurrence et signaux somme, S2, pendant la seconde récurrence.

Il est à noter que lorsque le domaine des distances à prendre en compte par le radar est relativement faible, par exemple est de l'ordre de 5 à 10 milles (environ 9 à 18 kilomètres), l'emploi de fréquences de récurrence élevées, de l'ordre de 5 à 15 kHz, est possible. Toutefois deux remarques sont à prendre en compte pour la détermination de la fréquence de récurrence :

- le domaine des distances dans lequel un traitement doit être mis en oeuvre pour éliminer les échos de pluie n'est qu'une fraction de la totalité du domaine des distances du radar ; c'est ainsi, par exemple, qu'il suffit généralement que ce traitement soit mis en oeuvre seulement pour les premiers milles du domaine des distances ; dans le cas de l'exemple décrit qui concerne un radar aéroporté, utilisé, en particulier, pour assurer la sécurité de navigation à très basse altitude, cette distance est de l'ordre de cinq milles nautiques. Au-delà de cette distance l'atténuation apportée sur les échos de pluie par la polarisation circulaire est, dans la grande majorité des applications, suffisante pour faire que ces échos ne soient pas gênants,
- la fréquence d'émission étant la même lors des deux récurrences d'un même bloc, il y a risque de recevoir des échos de second balayage c'est-à-dire de recevoir des échos issus d'une émission relative à la première récurrence lors de la seconde récurrence et, donc, risque de prise en compte de signaux erronés.

En fonction des deux remarques ci-avant il y a eu possibilité d'améliorer le radar qui vient d'être décrit à l'aide de la figure 1 ; cette amélioration a donné le radar illustré par le diagramme des temps selon la figure 2.

L'amélioration consiste à adopter des durées différentes pour les deux récurrences d'un même bloc de deux récurrences : la durée T1 de la première récurrence, relative au calcul et au traitement des écartométries $\vec{\Delta}$ (écartométries circulaires $\overrightarrow{\Delta C}$ et élévation $\overrightarrow{\Delta E}$ ), est accrue au détriment de la durée T2 de la seconde récurrence qui est réduite au domaine strictement nécessaire.

La figure 2 montre deux courbes Rb et A représentant respectivement les impulsions d'émission du radar et la commande, A, d'agilité de la fréquence émise. Les blocs de deux récurrences à une même fréquence d'émission comportent la première récurrence de durée T1 = 437,5 $\mu$s et la seconde récurrence de durée T2 = 62,5 $\mu$s inférieure à la durée T1, soit au total 500 $\mu$s par bloc. La durée T1 est subdivisée en deux zones : une zone de durée Tu = 125 $\mu$s constituant la zone d'utilisation du radar et correspondant au domaine d'investigation, allant jusqu'à 10 milles nautiques, soit environ 18 kilomètres, suivie d'une zone de durée Tn = 312,5 $\mu$s constituant une zone neutralisée ; la zone de durée Tn est destinée à apporter une atténuation renforcée aux échos issus d'une émission relative à la première recurrence du bloc et reçus durant la seconde récurrence (échos de second balayage). Quant à cette seconde récurrence, sa durée T2 de 62,5 $\mu$s correspond à un domaine des distances de 5 milles, en relation avec la première des deux remarques faites ci-avant ; par rapport au cas illustré par la figure 1, une atténuation supplémentaire de l'ordre de 8 décibels est obtenue sur les échos de second balayage.

Sur la figure 2 les signaux traités sont indiqués : signaux somme, S1, et écarts, $\Delta 1$, pendant la zone de durée Tu et signaux somme, S2, pendant la seconde récurrence.

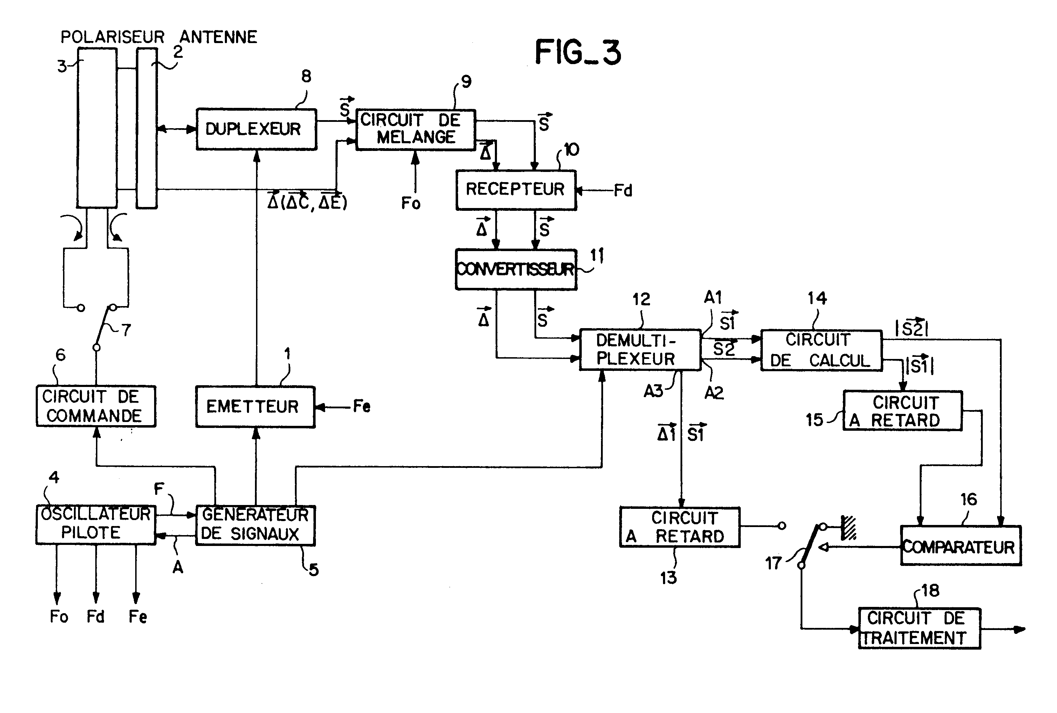

La figure 3 est un schéma du radar dont il a été question lors de la description des figures 1 et 2 ; un fonctionnement selon la figure 1 ou selon la figure 2 se caractérise par la durée des récurrences et donc des signaux mais ne fait pas apparaître de différences dans la figure 3.

Dans ce schéma le dispositif de synchronisation précise, relevant de la technologie courante, n'a pas été représenté en vue de rendre le dessin plus clair et de simplifier l'exposé.

La figure 3 représente un émetteur, 1, d'un radar, relié à une antenne, 2, par un duplexeur 8. Un circuit de mélange 9 reçoit les signaux somme $\vec{S}$ du duplexeur 8 et les signaux écarts $\vec{\Delta}$ de l'antenne ; il les transmet, après mélange avec la fréquence Fo fournie dans un oscillateur pilote 4, à un récepteur à fréquence intermédiaire 10. L'étage de sortie du récepteur 10 fournit les signaux $\vec{\Delta}$ et $\vec{S}$ en vidéofréquence par une démodulation à l'aide d'une fréquence Fd fournie par l'oscillateur 4.

L'oscillateur pilote, 4, fournit, outre les fréquences Fo et Fd, un signal F d'une fréquence de vingt mégahertz. Le signal F est délivré à un générateur de signaux, 5, comporte un circuit de comptage des périodes du signal F, suivi d'un circuit de décodage pour définir :

- la durée de fonctionnement de l'émetteur (signal R, correspondant aux courbes Ra, Rb des figures 1 et 2),
- les instants auxquels la fréquence Fe de l'émetteur doit être modifiée (signal d'agilité en fréquences, représenté par la courbe A des figures 1 et 2, et déterminant l'envoi par l'oscillateur 4 d'une fréquence Fe qui varie aléatoirement : valeurs Fi, Fj, Fk... de la figure 1, valeurs Fi, Fj... de la figure 2)
- les instants auxquels un circuit de commande, 6, doit commander le basculement d'un commutateur électronique, 7, à deux positions afin de modifier le sens de la polarisation de l'ensemble constitué par l'antenne 2 et un polariseur 3 associé à l'antenne ; ce basculement se produit alternativement avant et après une impulsion d'émission comme il a été expliqué lors de la description de la courbe P de la figure 1 ; il est à noter que ces instants de basculement restent définis de la même façon (après et avant les impulsions d'émission) dans le cas des blocs de deux récurrences de durées inégales ;
- et les instants de basculement d'un démultiplexeur 12 qui reçoit les signaux somme $\vec{S}$ et écarts $\vec{\Delta}$ du récepteur 10, par l'intermédiaire d'un convertisseur analogique-numérique 11 ; l'entrée des signaux somme $\vec{S}$, du démultiplexeur 11, est reliée à sa première sortie, A1, après l'impulsion de début de la première récurrence d'un bloc et jusqu'au début de l'impulsion d'émission suivante (cas de récurrences toutes identiques décrit à l'aide de la figure 1) ou jusqu'à la fin de la zone utile de durée Tu (figure 2 ; cas de récurrences de durées inégales) ; l'entrée des signaux sommes $\vec{S}$ du démultiplexeur 12 est reliée à sa seconde sortie, A2, après l'impulsion de début de la seconde récurrence d'un bloc et jusqu'à avant la première récurrence du bloc suivant, ce qui correspond, sur la figure 1, à la partie D de la courbe P située entre deux zones hachurées et pendant laquelle la polarisation à la réception est différente de la polarisation à l'émission.

Le démultiplexeur 12 comporte une troisième sortie A3 qui est reliée à ses entrées écarts et somme après l'impulsion de début de la première récurrence d'un bloc et jusqu'au début de l'impulsion d'émission suivante (cas de récurrences toutes identiques décrit à l'aide le la figure 1) ou jusqu'à la fin de la zone utile (figure 2 ; cas de récurrences de durées inégales).

Les sorties A1 et A2 du démultiplexeur 12 sont reliées à un circuit de calcul, 14, qui calcule les modules $|\vec{S1}|$ et $|\vec{S2}|$ relatifs aux signaux somme $\vec{S1}$ et $\vec{S2}$ pendant la première et la seconde récurrence. Les modules $|\vec{S1}|$ et $|\vec{S2}|$ relatifs aux

mêmes quanta distances de deux récurrences d'un même bloc sont comparés grâce à un ensemble composé d'un circuit à retard 15 qui retarde $\vec{S1}$ et d'un comparateur d'amplitude 16 qui compare le signal $\vec{S2}$ fourni directement par le circuit de calcul 14, au signal $\vec{S1}$ fourni par le circuit à retard.

Un circuit à retard 13 a une entrée reliée à la sortie A3 du démultiplexeur 12 pour recevoir les signaux $\vec{\Delta 1}$ et $\vec{S1}$ relatifs à la première récurrence d'un bloc. Le retard du circuit 13 est égal au retard du circuit 15 plus le retard apporté par le circuit de calcul 14.

Un commutateur électronique 17, commandé par le comparateur 16, reçoit sur une première borne les signaux $\vec{\Delta 1}$ et $\vec{S1}$ provenant du circuit à retard 13 et comporte une seconde borne qui est reliée à la masse. Si le résultat de la comparaison effectuée par le comparateur 16 est $|\vec{S1}| > |\vec{S2}|$, le comparateur autorise la transmission des signaux $\vec{\Delta 1}$, $\vec{S1}$ ; dans le cas contraire, qui correspond à la détection d'un écho parasite, le commutateur 17 laisse la sortie du circuit à retard 13 en l'air. Ainsi un circuit de traitement 18 relié à la borne commune du commutateur 17 ne reçoit que des signaux $\vec{\Delta 1}$ et $\vec{S1}$ identifiés, par le comparateur 16, comme relatifs à des échos utiles.

La présente invention n'est pas limitée aux exemples décrits c'est ainsi par exemple, que, surtout dans l'exemple selon la figure 1 et dans la mesure où les quanta relatifs aux distances proches ne sont pas exploités, la première récurrence d'un bloc aurait pu être effectuée avec des sens de polarisation circulaire différents à l'émission et à la réception et la seconde avec le même sens puisque les signaux parasites produits par les échos de pluie sont éliminés.

De même dans un bloc de deux récurrences la première récurrence peut être utilisée pour corriger la seconde, et la seconde pour le calcul et le traitement des écartométries. Dans ce cas la commutation de l'interrupteur 7 doit s'effectuer non plus avant l'impulsion d'émission relative à la première récurrence d'un bloc et après l'impulsion relative à la seconde récurrence mais après l'impulsion de la première récurrence et avant l'impulsion de la seconde récurrence.

Il est également possible, avec des récurrences de durées identiques, de transmettre vers les circuits de traitement les signaux relatifs à chacune des récurrences en éliminant les signaux parasites grâce toujours à une comparaison entre les modules des voies somme des quanta distance des deux récurrences d'un même bloc ; ceci permet d'utiliser dans le circuit de traitement les signaux utiles relatifs aux deux récurrences.

**Revendications**

1. Radar travaillant en polarisation circulaire et permettant l'identification des échos de pluie, caractérisé en ce qu'il comporte : une antenne unique (2) ; un polariseur (3) associé à des moyens de commutation (5, 6, 7) pour inverser d'une récurrence à la suivante, le sens de la polarisation circulaire à l'émission ou à la réception, afin de déterminer des blocs faits de deux récurrences successives ayant des sens de polarisation, à l'émission et à la réception, respectivement identiques et opposés ; un démultiplexeur (12) pour démultiplexer les signaux vidéo relatifs à l'une et à l'autre des récurrences d'un bloc ; des moyens de comparaison (14, 15, 16) pour comparer les signaux vidéo somme des deux récurrences d'un bloc ; et un commutateur (17) commandé par les moyens de comparaison pour éliminer, parmi les signaux vidéo relatifs à l'une des deux récurrences d'un bloc, ceux que les moyens de comparaison désignent comme étant relatifs à des échos de pluie.

2. Procédé de protection d'un radar contre les échos de pluie, ce radar travaillant en polarisation circulaire, caractérisé en ce que, le radar comportant une antenne unique (2), il consiste : à inverser d'une récurrence à la suivante, le sens de la polarisation circulaire à l'émission ou à la réception, afin de faire travailler le radar par blocs de deux récurrences successives ayant des sens de polarisation à l'émission et à la réception, respectivement identiques et opposés ; à obtenir des signaux vidéo somme et écarts ; à comparer les signaux vidéo somme (|S1|, |S2|) relatifs à de mêmes quanta de distance dans l'une et l'autre des récurrences d'un bloc ; à transmettre les signaux vidéo somme et écarts relatifs à une des récurrences d'un bloc ; et à éliminer, des signaux vidéo somme et écarts transmis, ceux que les résultats de la comparaison désignent comme étant des échos de pluie, le critère d'élimination étant que, pour un même quantum de distance, le signal vidéo somme de la récurrence, ayant des sens de polarisation identiques à l'émission et à la réception, soit d'amplitude très inférieure à l'amplitude de l'autre signal vidéo somme auquel il est comparé.

3. Procédé selon la revendication 2, caractérisé en ce que les deux récurrences d'un même bloc sont de même durée (T).

4. Procédé selon la revendication 2, caractérisé en ce que les deux récurrences d'un même bloc sont de durées différentes (T1, T2) et en ce que ce sont les signaux vidéo somme et écarts relatifs à la plus longue des deux récurrences d'un bloc qui sont transmis.

5. Procédé selon la revendication 4, caractérisé en ce que, pour un bloc, les signaux vidéo transmis sont ceux relatifs à une zone, dans le temps, située au début de la récurrence la plus longue, cette zone étant choisie de durée comprise entre la durée de la récurrence la plus longue et la durée de la récurrence la plus courte.

## Claims

1. Radar working with circular polarization and allowing the identification of rain echoes, characterised in that it comprises: a single antenna (2); a polariser (3) associated with switching means (5, 6, 7) to reverse, from one repetition to the next, the direction of the circular polarization on transmission or on reception, in order to determine blocks formed from two successive repetitions having directions of polarization, on transmission and on reception, which are identical and opposite respectively; a demultiplexer (12) to demultiplex the video signals relating to one and to the other of the repetitions of a block; comparison means (14, 15, 16) for comparing the video sum signals of the two repetitions of a block; and a switch (17) controlled by the comparison means in order to eliminate, from among the video signals relating to one of the two repetitions of a block, those which the comparison means designate as relating to rain echoes.

2. Method of protection of a radar from rain echoes, this radar working with circular polarisation, characterised in that, the radar comprising a single antenna (2), it consists in: reversing, from one repetition to the next, the direction of circular polarisation on transmission or on reception, in order to make the radar work in blocks of two successive repetitions having directions of polarisation on transmission and on reception which are identical and opposite respectively; obtaining sum and difference video signals; comparing the sum video signals ($|S1|$, $|S2|$) relating to same distance quanta in each one of the repetitions of a block; transmitting the sum and difference video signals relating to one of the repetitions of a block; and eliminating, from the transmitted sum and difference video signals, those which the results of the comparison designate as being rain echoes, the criterion for elimination being that, for a same distance quantum, the sum video signal of the repetition, having identical directions of polarisation on transmission and on reception, is of amplitude very much lower than the amplitude of the other sum video signal with which it is compared.

3. Method according to Claim 2, characterised in that the two repetitions of a same block are of the same duration (T).

4. Method according to Claim 2, characterised in that the two repetitions of a same block have different durations (T1, T2) and in that it is the sum and difference video signals relating to the longest of the two repetitions of a block which are transmitted.

5. Method according to Claim 4, characterised in that, for one block, the transmitted video signals are those relating to a time zone occurring at the start of the longest repetition, this zone being chosen to have a duration between the duration of the longest repetition and the duration of the shortest repetition.

## Patentansprüche

1. Radar, das mit Kreispolarisation arbeitet und die Erkennung von Regenechos ermöglicht, dadurch gekennzeichnet, daß es umfaßt: Eine einzige Antenne (2); einen Polarisator (3), dem Schaltmittel (5, 6, 7) zugeordnet sind, um von einer Folgeperiode zur nächsten den Sinn der Kreispolarisation beim Sendebetrieb oder Empfang zu invertieren, damit Blöcke bestimmt werden, die aus zwei aufeinanderfolgenden Folgeperioden stammen, die im Sendebetrieb gleiche und im Empfangsbetrieb entgegengesetzte Polarisationsrichtung haben; einen Demultiplexer (12) zum Demultiplexieren der Videosignale, die zu der einen und zu der anderen Folgeperiode eines Blocks gehören; Komparatormittel (14, 15, 16) zum Vergleichen der Summen-Videosignale der zwei Folgeperioden eines Blocks; und einen Schalter (17), der durch die Komparatormittel gesteuert wird, um unter den Videosignalen für eine der zwei Folgeperioden eines Blocks diejenigen zu unterdrücken, welche die Komparatormittel als solche bezeichnen, die zu Regenechos gehören.

2. Verfahren, um ein Radar gegen Regenechos zu schützen, wobei dieses Radar mit Kreispolarisation arbeitet, dadurch gekennzeichnet, daß in dem eine einzige Antenne (2) aufweisenden Radar: von einer Folgeperiode zur nächsten die Richtung der Kreispolarisation im Sendebetrieb und im Empfangsbetrieb invertiert wird, damit das Radar in Blöcken von zwei aufeinanderfolgenden Folgeperioden arbeitet, bei denen die Polarisationsrichtung im Sendebetrieb gleich und im Empfangsbetrieb entgegengesetzt ist; Summen- und Differenz-Videosignale gewonnen werden; die Summen-Videosignale ($|S1|$, $|S2|$) für dieselben Entfernungsquanten in der einen und anderen Folgeperiode eines Blockes verglichen werden; die Summen- und Differenz-Videosignale für eine der Folgeperioden eines Blockes übertragen werden; und in den übertragenen Summen- und Differenz-Videosignale diejenigen unterdrückt werden, die nach den Vergleichsergebnissen als Regenechos bezeichnet sind, wobei das Unterdrückungskriterium darin besteht, daß für ein gleiches Entfernungsquantum das Summen-Videosignal der Folgeperiode, bei welcher die Polarisationsrichtung im Sendebetrieb und im Empfangsbetrieb dieselbe ist, eine sehr viel kleinere Amplitude als das andere Summen-Videosignal aufweist, mit welchem es verglichen wird.

3. Verfahren nach Anspruch 2, dadurch gekennzeichnet, daß die zwei Folgeperioden desselben Blockes dieselbe Dauer (T) aufweisen.

4. Verfahren nach Anspruch 2, dadurch gekennzeichnet, daß die zwei Folgeperioden desselben Blockes verschiedene Dauern (T1, T2) aufweisen und daß diejenigen Summen- und Differenz-Videosignale übertragen werden, die zu der längeren der beiden Folgeperioden eines Blockes gehören.

5. Verfahren nach Anspruch 4, dadurch gekennzeichnet, daß die übertragenen Videosignale für einen Block diejenigen sind, die zu einer Zone gehören, die zeitlich am Anfang der längsten Folgeperiode liegt, wobei die Dauer dieser Zone zwischen der Dauer der längsten Folgeperiode und der Dauer der kürzesten Folgeperiode gewählt wird.

EP 0 247 911 B1

# FIG_1

# FIG_2

EP 0 247 911 B1

FIG_3

POLARISEUR  ANTENNE

DUPLEXEUR  8

CIRCUIT  DE
MELANGE  9

$\vec{S}$

$\vec{S}$

$\vec{\Delta}(\vec{\Delta C}, \vec{\Delta E})$

Fo

RECEPTEUR  10  ← Fd

$\vec{\Delta}$  $\vec{S}$

CONVERTISSEUR  11

$\vec{\Delta}$  $\vec{S}$

DEMULTI-
PLEXEUR  12

A1  $\vec{S1}$

S2

A3  A2

CIRCUIT
DE  CALCUL  14

$|\vec{S2}|$

$|\vec{S1}|$

CIRCUIT
A RETARD  15

$\vec{\Delta 1}$  $\vec{S1}$

CIRCUIT
A  RETARD  13

CIRCUIT DE
COMMANDE  6

7

EMETTEUR  1  ← Fe

OSCILLATEUR
PILOTE  4

F

GENERATEUR
DE SIGNAUX  5

A

Fo  Fd  Fe

COMPARATEUR  16

17

CIRCUIT DE
TRAITEMENT  18

3

2

9